# EUROPÄISCHE PATENTSCHRIFT

(11) **EP 2 300 726 B1**
(45) Veröffentlichungstag und Bekanntmachung des Hinweises auf die Patenterteilung: **01.04.2015**
(21) Anmeldenummer: 09779717.9
(22) Anmeldetag: 10.06.2009
(51) Int. Cl.: F16C 27/00, F16C 32/04, F16C 39/02, F16C 39/06

(54) **LAGERANORDNUNG UND LAGERBOCK MIT EINEM MAGNETISCHEN RADIALLAGER UND EINEM FANGLAGER FÜR EINE ROTIERENDE MASCHINE**
BEARING ARRANGEMENT AND BEARING BLOCK HAVING A MAGNETIC RADIAL BEARING AND A SAFETY BEARING FOR A ROTATING MACHINE
ENSEMBLE PALIER ET SUPPORT DE PALIER AVEC UN PALIER RADIAL MAGNÉTIQUE ET UN PALIER D ACCUEIL POUR UNE MACHINE ROTATIVE

(30) Priorität: 18.07.2008 DE 102008033758
(43) Veröffentlichungstag der Anmeldung: 30.03.2011
(73) Patentinhaber: Siemens Aktiengesellschaft, 80333 München (DE)
(72) Erfinder: SIEGL, Günther, 13439 Berlin (DE); WALTER, Hartmut, 107-0062 Tokyo (JP)
(86) Internationale Anmeldenummer: PCT/EP2009/057211
(87) Internationale Veröffentlichungsnummer: WO 2010/006859

(56) Entgegenhaltungen:
- EP-A- 0 867 627
- DE-A1- 4 334 662
- DE-A1-102005 036 942
- JP-U- 3 065 804
- US-A- 5 021 697
- US-A- 5 521 448

## Beschreibung

Die Erfindung betrifft zwei Lageranordnungen aus einem magnetischen Radiallager und aus einem Fanglager zur berührungslosen Lagerung und zum Auffangen einer Rotorwelle einer Turbomaschine mit einer Leistung von 1000 kW und mehr, wobei beide Lager axial fluchtend in einem gemeinsamen Lagergehäuse aufgenommen sind.

Weiterhin betrifft die Erfindung zwei Lagerböcke für eine Turbomaschine mit einer Leistung von 1000 kW und mehr, wobei der jeweilige Lagerbock in Bezug auf die Turbomaschine axial außenliegend angeordnet ist und ein in einem gemeinsamen Lagergehäuse aufgenommenes magnetisches Radiallager zur berührungslosen Lagerung einer Rotorwelle und ein Fanglager zum Auffangen der Rotorwelle der Turbomaschine aufweist und wobei die beiden Lager axial fluchtend im Lagergehäuse aufgenommen sind.

Aus der japanischen Offenlegungsschrift JP 6335199 A ist ein derartiger, zuvor beschriebener Lagerbock bekannt.

In der deutschen Offenlegungsschrift DE 30 11 078 A ist ein Lagerbock mit einem faktisch Null-Längsspiel aufweisenden Lager beschrieben. Der dortige Lagerbock weist ein Lager mit rollenden Bauelementen auf. Es ist zumindest ein Ring des Lagers mit einer magnetischen Einrichtung fest verbunden und diese magnetische Einrichtung ist so angeordnet, dass sie den Ringen des Lagers ein relatives Abstandsverhältnis in axialer Richtung des Lagerbocks verschafft, um faktisch das Längsspiel des Lagers zu eliminieren.

Aus der Übersetzung DE 696 25 870 T2 des europäischen Patents EP 0 768 467 B1 ist eine Turbomolekularpumpe zur Anwendung in abgedichteten Vakuumsystemen bekannt. Die dort offenbarte Lagereinheit umfasst ein statorseitiges passives radiales Magnetlager mit einer Vielzahl von Permanentmagneten. Diesen Permanentmagneten liegen auf einem Rotor der Turbomolekularpumpe angeordnete weitere Permanentmagnete gegenüber, wobei sich im geregelten Zustand jeweils gleiche Magnetpole gegenüberliegen. Die Lagereinheit umfasst zudem ein fest mit dem statorseitigen Teil des Magnetlagers verbundenes Schutzlagerglied (Notschutzlagerglied), um einen direkten Kontakt zwischen dem Rotor und dem Stator zu verhindern. Weiterhin ist der statorseitige Teil des Magnetlagers beweglich im Stator aufgehängt und mittels eines zylindrischen elastischen Vorspannmittels in axialer Richtung vorgespannt, um mit einem aktiven magnetischen Axiallager der Lagereinheit zur axialen Lageregelung des Rotors zusammenwirken zu können. Darüberhinaus werden durch das Vorspannmittel die beim Hochlauf des Rotors entstehenden resonante Schwingungen in Radialrichtung der Hauptwelle bzw. des Rotors absorbiert.

Die DE 10 2005 036 942 A1 offenbart eine schnelldrehende Turbomaschine, die zur Lagerung des Rotors ein Magnetlager und ein Fanglager aufweist. Die US50215697 zeigt eine magnetische Lageranordung mit einem Fanglager.

Bei den rotierenden Maschinen handelt es sich vorzugsweise um Turbomaschinen, wie z.B. um Turbogeneratoren, Turbomotoren oder Turbokompressoren. Die maximale betriebliche Drehzahl derartiger Maschinen liegt üblicherweise bei mehr als 4000 min⁻¹. Sie weisen typischerweise eine Leistung von 1000 kW und mehr auf. Im Falle eines Turbokompressors treibt eine Elektromotoreinheit eine Turbineneinheit an. Die Rotorwelle der Elektromotoreinheit und die Turbinenwelle sind vorzugsweise fluchtend angeordnet. Beide Wellen können über ein Kupplungselement miteinander verbunden sein.

Bei den bekannten Maschinen werden in zunehmendem Maße aktive magnetische Radiallager zur Lagerung der Rotorwelle anstelle von Gleitlagern verwendet, um die dortigen Reibungsverluste zu reduzieren. Dabei wird die Tragkraft durch geregelte Elektromagneten erzeugt. Bei Ausfall der Regelung fällt die Rotorwelle bzw. ein Rotorwellenende in ein Fanglager, das für begrenzte Zeit die Notlaufeigenschaften der rotierenden Maschinen zur Verfügung stellt. Das magnetische Radiallager und das Fanglager können in einem Lagerschild oder in einem Maschinengehäuse der rotierenden Maschine angeordnet sein. Alternativ können das magnetische Radiallager und das Fanglager axial benachbart in einem gemeinsamen Lagergehäuse eines Lagerbocks aufgenommen sein. Typischerweise sind zwei Lagerböcke zur Lagerung eines jeweiligen axialen Wellenendes der rotierenden Maschine vorgesehen. Ferner kann in dem Lagergehäuse ein axiales Magnetlager zur axialen Fixierung der aufgenommenen Rotorwelle aufgenommen sein.

Die magnetischen Lager gewährleisten eine berührungslose, verschleißfreie und stabile Lagerung der Rotorwelle bei sehr hohen Drehzahlen. Im betriebsmäßigen Einsatz wird typischerweise ein Luftspalt im Bereich von ca. 0,5 bis 1,0 mm zwischen dem radialen Magnetlager und der zur lagernden Rotorwelle aufrechterhalten. Da systembedingt ein Magnetlager ausfallen kann, ist ein Fanglager vorgesehen, welches die Rotorwelle bei Ausfall des Magnetlagers oder generell beim Abschalten der elektrischen Anlage aufnehmen kann. Das Fanglager weist hierzu eine im Vergleich zum Wellendurchmesser geringfügig größeren Innendurchmesser auf, sodass die Rotorwelle im Falle der betriebsmäßigen Magnetlagerung das Fanglager nicht berührt. Der Luftspalt zwischen dem Fanglager und der Rotorwelle ist im Vergleich zum betrieblichen Luftspalt beim magnetischen Radiallager etwas kleiner. Er liegt typischerweise in einem Bereich von 0,1 bis 0,5 mm.

Ein magnetisches Radiallager weist typischerweise einen hohlzylindrischen, ringförmigen Aufbau mit einem ringförmigen Magnetkern auf, an dessen radialer Innenseite Stromspulen zur Bildung von Elektromagneten zur magnetischen Lagerung eingebracht sind. Derartige magnetische Radiallager sind in der Regel durch eine Schraubverbindung fest mit einem Lagergehäuse bzw. mit dem Lagerschild verbunden. Alternativ kann das magnetische Radiallager Teil eines Lagerbocks sein, welcher fest mit dem Fundament der zu tragenden rotierenden Maschine verbunden ist. Üblicherweise sind sämtliche tragenden Bauteile der rotierenden Maschine einschließlich der magnetischen Radiallager steif ausgeführt.

Fällt die Rotorwelle der rotierenden Maschine bei Ausfall des magnetischen Radiallagers in das Fanglager, so treten starke Stoßbelastungen am gesamten Lager auf. Diese können prinzipiell durch eine elastische Lagerung des Fanglagers vermindert werden. Jedoch wird der zur Verfügung stehende Einfederungsweg des Fanglagers durch den Luftspalt des aktiven Teils des Magnetlagers begrenzt. Dieser darf beim Sturz der Rotorwelle in das Fanglager nicht überschritten werden, um Beschädigungen und einen Ausfall des magnetischen Radiallagers zu vermeiden. Die Einstellparameter sind daher für eine elastische Lagerung des Fanglagers stark eingeschränkt.

Die magnetischen Radiallager sind zumindest mittelbar fest, das heißt steif oder starr, mit dem Fundament der rotierenden Maschine bzw. mit dem Lagerschild oder mit dem Maschinengehäuse der rotierenden Maschine verbunden. Durch steife Anbindung ist das Magnetlager speziell bei sehr hohen Drehzahlen besonders empfindlich. Die Ursache liegt darin begründet, dass die zur Regelung des magnetischen Radiallagers erforderlichen Lagesensoren durch mechanische Anregungen von außen, wie z.B. durch das Maschinengehäuse oder über das Fundament, gleichfalls angeregt werden. Folglich erfassen die Lagesensoren Relativbewegungen zwischen dem feststehenden Magnetlager und der Maschinenachse, das heißt der (konstruktiven) Rotationsachse der rotierenden Maschine. Die Relativbewegungen werden folglich nicht nur durch eine Bewegung der Rotorwelle, sondern durch eine Sensorbewegung verursacht. In einem solchen Fall kann das Magnetlager nachteilig nicht in hohen Drehzahlbereichen betrieben werden.

Es ist daher eine Aufgabe der Erfindung, eine im Vergleich zum Stand der Technik verbesserte Lageranordnung sowie einen verbesserten Lagerbock für eine rotierende Maschine anzugeben.

Die Aufgabe der Erfindung wird für die beiden Lageranordnung durch die Merkmale der Patentansprüche 1 und 2 gelöst. Die Aufgabe der Erfindung wird für die beiden Lagerböcke durch die Merkmale der Patentansprüche 3 und 4 gelöst. Vorteilhafte Ausführungsformen der vorherigen Vorrichtungen sind in den abhängigen Ansprüchen 5 bis 7 angegeben.

Erfindungsgemäß ist das Lagergehäuse der Lageranordnung mit den beiden fest miteinander verbundenen Lagern in Bezug auf ein Lagerschild oder auf ein Maschinengehäuse der Turbomaschine elastisch aufgehängt. Vorzugsweise sind die beiden Lager im Lagergehäuse fest eingeschraubt.

Im Bezug auf die alternative Lageranordnung sind erfindungsgemäß beide Lager im gemeinsamen Lagergehäuse elastisch aufgehängt. Das Lagergehäuse ist fest mit dem Lagerschild oder mit dem Maschinengehäuse verbunden. Der mechanische feste Verbund aus Fanglager und magnetischem Radiallager ist dagegen in gewissem Maße elastisch beweglich im Lagergehäuse aufgenommen. Der mechanische Verbund kann z.B. ein axial verlaufender Spannverband sein.

Dadurch werden vorteilhaft Stoßbelastungen am Fanglager bei Ausfall des Magnetlagers deutlich vermindert. Ein weiterer Vorteil ist, dass durch die Elastizität des Fanglagers, bewirkt durch die Reihenschaltung aus Fanglager-Elastizität und der Elastizität der Aufhängung, ein erheblich größerer Einfederungsweg für die Rotorwelle beim Fall in das Fanglager zur Verfügung steht. Der Einfederungsweg bleibt für das Fanglager dabei relativ zum Magnetlagerluftspalt erhalten. Ein weiterer Vorteil ist, dass durch diese erweiterte Dämpfungsmöglichkeit die Lebensdauer der Lageranordnung und insbesondere die des Fanglagers deutlich erhöht wird. Zudem werden mechanische Störungen, die z.B. über das Fundament in die Lageranordnung bzw. in den Lagerbock eingekoppelt werden, durch die elastische Entkopplung des Magnetlagers weitgehend unterdrückt. Dadurch sind keine kritischen Relativbewegungen mehr zwischen dem feststehenden Magnetlager und der Rotorwelle durch die Lagesensoren messbar.

Zur Lösung der Aufgabe für den Lagerbock sind erfindungsgemäß die beiden fest miteinander verbundenen Lager elastisch im Lagergehäuse aufgenommen. Der Lagerbock weist eine Lagerbockstütze zur Befestigung des Lagergehäuses an einem Maschinengehäuse oder auf einem Fundament der Turbomaschine auf. Insbesondere ist die Lagerbockstütze fest, das heißt starr oder steif, mit dem Maschinengehäuse oder dem Fundament verbunden.

Alternativ zur vorherigen Ausführungsform ist zwischen dem Lagergehäuse mit den beiden fest aufgenommenen Lagern und der Lagerbockstütze und/oder zwischen der Lagerbockstütze und dem Maschinengehäuse bzw. zwischen der Lagerbockstütze und dem Fundament zumindest ein elastisches Element angeordnet.

Nach einer besonderen Ausführungsform der beiden Vorrichtungen, das heißt der Lageranordnung und des Lagerbocks, kann zur elastischen Aufhängung ein elastisches Element aus einem elastischen Werkstoff, wie z.B. aus Gummi, aus einem Kunststoffelastomer, aus einer Gummi-Metall-Verbindung, vorgesehen sein. Dämpfungselemente aus einer Gummi-Metall-Verbindung sind z.B. unter dem Markennamen MEGI® bekannt. Das elastische Element kann neben reversiblen Federungseigenschaften auch Dämpfungseigenschaften aufweisen. Die Dämpfung selbst ist dabei verlustbehaftet, das heißt ein Teil der auf das elastische Element einwirkenden mechanischen Schwingungsenergie wird dabei in Wärmeenergie umgesetzt.

Nach einer Ausführungsform der Vorrichtungen weist das elastische Element derart bemessene Feder- und Dämpfungseigenschaften auf, dass die Rotorwelle bei Wegfall der magnetischen Lagerung um einen Einfederungsweg einfedert. Der Einfederungsweg ist dabei auf die konstruktive Rotationsachse der rotierenden Maschine bezogen. Er weist einen Maximalwert auf, der zwischen einem betrieblichen Nennwert des Fanglagerluftspaltes und einem Vielfachen davon, insbesondere einem 10-bis 20-fachen davon, liegt. Durch den im Vergleich zum Stand der Technik erheblichen größeren Einfederungsweg ist eine besonders sanfte Abfederung der in das Fanglager fallenden Rotorwelle möglich. Durch die feste Verbindung zwischen magnetischem Radiallager und Fanglager wird zu keinem Zeitpunkt das Magnetlager, insbesondere die Spulen des Magnetlagers, durch die Außenseite der Rotorwelle berührt und beschädigt.

Nach einer weiteren Ausführungsform sind das magnetische Radiallager und das Fanglager zur berührungslosen Lagerung und zum Auffangen der Rotorwelle bis zu einer Achslast von 1 t ausgelegt. Bei besonderer Ausführung kann die Achslast auch höhere Werte annehmen, wie z.B. 5 t, 10 t oder mehr.

Schließlich kann die Vorrichtung ein mit den beiden Lagern fest verbundenes, axial dazu angeordnetes magnetisches Axiallager zur axialen Fixierung der Rotorwelle aufweisen. Ein derartiges Axiallager wirkt mit einer dazu berührungslos mit der Rotorwelle fest verbundenen, radial abstehenden Scheibe zusammen.

Die Erfindung sowie vorteilhafte Ausführungsformen der Erfindung sind nachfolgend am Beispiel von Figuren erläutert. Dabei zeigen
- FIG 1: eine rotierende Maschine mit einem beispielhaft in einem Lagerbock gelagerten Rotorwellenende und einer in einem Lagerschild der rotierenden Maschine aufgenommenen Lageranordnung,
- FIG 2: einen senkrechten Schnitt durch die Drehachse des in FIG 1 gezeigten Lagerbocks mit einem zwischen einem Lagergehäuse und einer Maschinenstütze des Lagerbocks eingebrachten elastischen Element,
- FIG 3: den Lagerbock gemäß FIG 2 bei Ausfall des magnetischen Radiallagers,
- FIG 4: einen senkrechten Schnitt durch die Drehachse der Lageranordnung gemäß FIG 1 und
- FIG 5: die Lageranordnung gemäß FIG 4 bei Ausfall des magnetischen Radiallagers.

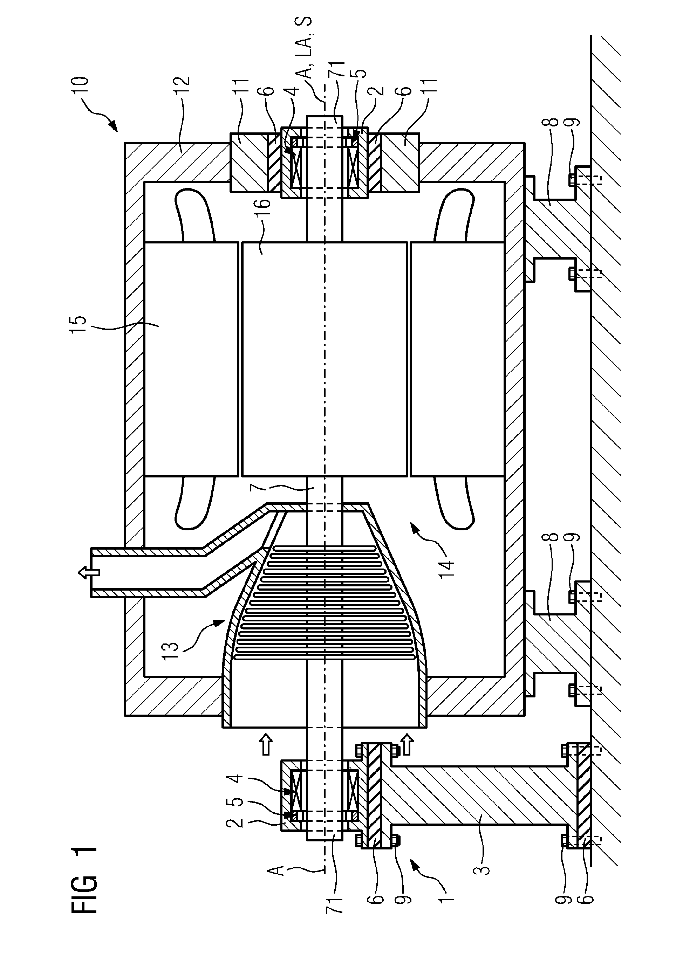

FIG 1 zeigt eine rotierende Maschine 10 mit einem beispielhaft in einem Lagerbock 1 gelagerten Rotorwellenende 71 und einer in einem Lagerschild 11 der rotierenden Maschine 10 aufgenommenen Lageranordnung. Bei der in der FIG 1 gezeigten rotierenden Maschine 10 handelt es sich beispielhaft um einen Turbokompressor, welcher eine Turbineneinheit 13 und eine Elektromotoreinheit 14 zum Antreiben einer gemeinsamen Rotorwelle 7 aufweist. Auf der Rotorwelle 7 sitzt zum einen eine nicht weiter bezeichnete Turbine und ein Rotorpaket 16 der Elektromotoreinheit 14 zum Antreiben der Turbine. Mit dem Bezugszeichen 15 ist ein Stator der Elektromotoreinheit 14 bezeichnet. Mit dem Bezugszeichen 12 ist ein Maschinengehäuse der rotierenden Maschine 10 bezeichnet. Das gesamte Maschinengehäuse 12 ist auf zwei Maschinenstützen 8 auf einem Fundament 20 befestigt. Mit dem Bezugszeichen 9 sind entsprechende Befestigungsmittel, insbesondere Befestigungsschrauben, bezeichnet.

Im linken Teil der FIG 1 ist das linke Ende 71 der Rotorwelle 7 in einem Lagerbock 1 zur Lagerung aufgenommen. Mit dem Bezugszeichen 3 ist eine Lagerbockstütze bezeichnet. Der gezeigte Lagerbock 1 weist ein Lagergehäuse 2 auf, in welchem ein magnetisches Radiallager 4 zur berührungslosen Lagerung der Rotorwelle 7 und ein Fanglager 5 zum Auffangen der Rotorwelle 7 angeordnet sind. Dagegen ist beispielhaft das rechte Ende 71 der Rotorwelle 7 in einer Lageranordnung aufgenommen, welche ihrerseits in einem Lagerschild 11 der rotierenden Maschine 10 angeordnet ist. Das Lagerschild 11 kann seinerseits fest mit dem Maschinengehäuse 12 der rotierenden Maschine 10 verbunden sein. Mit dem Bezugszeichen A, LA, S sind eine Drehachse der Rotorwelle 7, eine (konstruktive) Lagerungsachse der Lageranordnung bzw. des Lagerbocks 1 sowie eine (konstruktive) Rotationsachse der rotierenden Maschine 10 bezeichnet. Alle drei Achsen A, LA, S fluchten im Normalbetrieb der rotierenden Maschine 10 faktisch miteinander.

Erfindungsgemäß sind nun das magnetische Radiallager 4 und das Fanglager 5 axial fluchtend und fest miteinander verbunden. Weiterhin sind die Lager 4, 5 in Bezug auf das Lagerschild 11, auf das Maschinengehäuse 12 oder auf das Fundament 20 der rotierenden Maschine 10 elastisch aufgehängt.

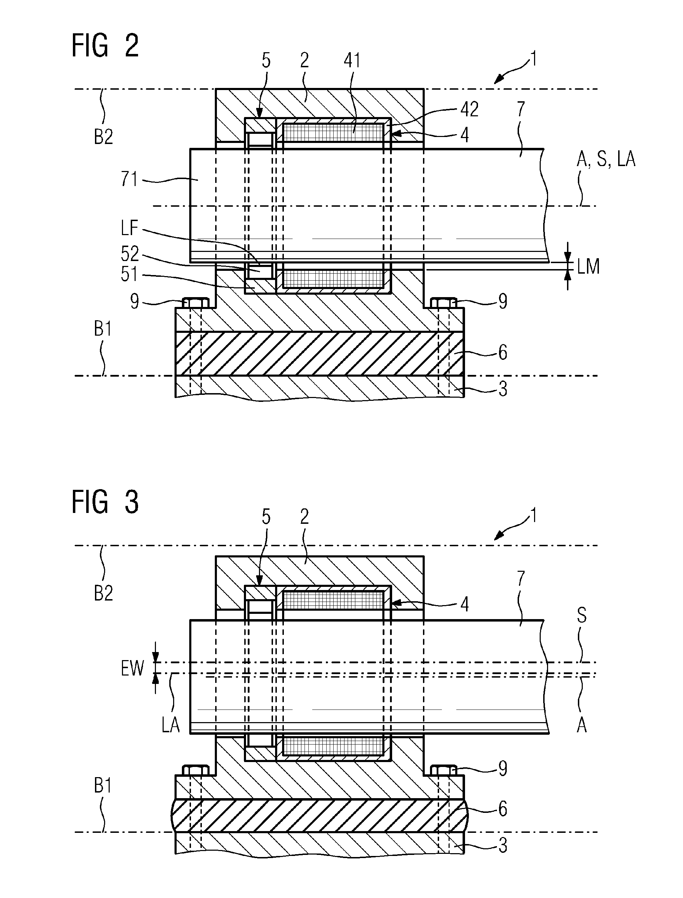

Im Beispiel der FIG 1 ist bei dem gezeigten Lagerbock 1 zwischen dem Lagergehäuse 2 und der Lagerbockstütze 3 ein elastisches Element 6 für die elastische Aufhängung angeordnet. Alternativ oder zusätzlich kann das elastische Element 6, wie im Beispiel der FIG 1 gestrichelt angedeutet, auch zwischen dem Fundament 20 und der Lagerbockstütze 3 angeordnet sein. Bei dem gezeigten Werkstoff handelt es sich insbesondere um ein Kunststoffelastomer oder um einen Gummiwerkstoff. Der kann alternativ oder zusätzlich mechanische Federelemente, wie z.B. Tellerfedern oder dergleichen, aufweisen. Die Lagerbockstütze 3 ist beispielhaft mittels Befestigungsschrauben 9 an dem Lagergehäuse 2 des Lagerbocks 1 angeschraubt. Alternativ kann der Lagerbock 1 ein gemeinsames Lagergehäuse aufweisen, welches sich aus dem Lagergehäuse 2 und der Lagerbockstütze 3 einteilig zusammensetzt. Dieses Teil kann beispielsweise aus einem Guss gefertigt sein. Im rechten Teil der FIG 3 ist die gezeigte Lageranordnung gleichfalls fest in einem Lagergehäuse 2 aufgenommen. Das Lagergehäuse 2 ist über ein beispielhaft ringförmiges, elastisches Element 6 mit dem gezeigten Lagerschild 11 verbunden, welches seinerseits fest mit dem Maschinengehäuse 12 der rotierenden Maschine 10 verbunden sein kann. Üblicherweise wird das Lagerschild 11 im Sinne eines Flansches an die Stirnseite des Maschinengehäuses 12 angeschraubt.

FIG 2 zeigt einen senkrechten Schnitt des Lagerbocks 1 gemäß FIG 1 durch die Drehachse A der Rotorwelle 7 im Normalbetrieb der rotierenden Maschine 10. Die gezeigte Rotorwelle 7 ist folglich im magnetischen Radiallager 4 berührungslos aufgehängt. In diesem Fall fallen die Drehachse A der Rotorwelle 7, die konstruktive Lagerungsachse LA sowie die konstruktive Rotations- bzw. Maschinenachse S der rotierenden Maschine 10 faktisch zusammen. Mit dem Bezugszeichen 41 ist ein Spulenkörper des Magnetlagers 4, mit dem Bezugszeichen 42 der Ringkern des Magnetlagers 4 bezeichnet. Mit dem Bezugszeichen 51 ist ein Lageraußenring des Fanglagers 5 bezeichnet, welcher wie der Kern 42 der Magnetlagers 4 fest im Lagergehäuse 2 aufgenommen ist. Mit dem Bezugszeichen 52 sind Reibelemente an der Innenseite des Lageraußenrings 51 bezeichnet, welche bei Wegfall der Versorgung des magnetischen Radiallagers 4 die radiale Außenseite der Rotorwelle 7 kontaktieren und tragen.

Mit dem Bezugszeichen LM ist ein magnetischer Luftspalt bezeichnet, welcher sich im Betrieb der rotierende Maschine 10, bzw. des magnetischen Radiallagers 4 einstellt. Mit LF ist ein betrieblicher Luftspalt zwischen der Rotorwellenaußenseite und dem Fanglager 5 bezeichnet. Er ist typischerweise deutlich kleiner als der magnetische Luftspalt LM. Typischerweise weist der magnetische Luftspalt LM Werte im Bereich von 0,5 bis 1,0 mm auf. Dagegen weist der Fanglagerluftspalt LF typischerweise einen Wert im Bereich von 0,1 mm bis 0,5 mm auf.

Bei dem gezeigten Lagerbock 1 ist das Lagergehäuse 2 über ein elastisches Element 6 mit der Maschinenstütze 3 verbunden, die ihrerseits fest mit dem nicht weiter gezeigten Fundament 20 verbunden ist. Mit dem Bezugszeichen B1, B2 sind zwei maschinenfeste Bezugsebenen eingetragen, welche in Bezug auf das Maschinengehäuse 12 bzw. auf das Fundament 20 der rotierenden Maschine 10 bezogen sind.

Die FIG 3 zeigt den Lagerbock 1 gemäß FIG 2 bei Ausfall des Magnetlagers 4. Durch die nun fehlende Magnetkraft fällt die Rotorwelle 7 in das Fanglager 5. Dadurch, dass das Fanglager 5 und das magnetische Radiallager 4 fest miteinander verbunden sind - wie hier im vorliegenden Beispiel durch das gemeinsame Lagergehäuse 2 - kann die Rotorwelle 7 das magnetische Radiallager 4 nicht berühren und folglich nicht beschädigen. Durch die elastische Aufhängung des Lagergehäuses 2 über das elastische Element 6 mit der festen Lagerbockstütze 3 kann die Rotorwelle 7 elastisch einfedern. Dadurch wird die Stoßbelastung und eine mögliche Beschädigung des Fanglagers 5 vermieden. Durch das Hineinfallen der Rotorwelle 7 in das Fanglager 5 stimmen die zuvor gemeinsam fluchtenden Achsen A, S, LA durch das elastische Einfedern jetzt nicht mehr überein. Wie die FIG 3 zeigt, ist das Lagergehäuse 2 im Vergleich zur FIG 2 durch das Zusammendrücken des elastischen Elementes 6 nach unten verschoben. Diese Strecke entspricht dem Einfederungsweg EW, um den die Lageranordnung im Vergleich zum Stand der Technik elastisch nachgeben kann. Dabei weist das elastische Element 6 derart bemessene Feder- und Dämpfungseigenschaften auf, dass die Rotorwelle 7 bei Wegfall der magnetischen Lagerung um diesen Einfederungsweg EW einfedern kann. Er weist einen Maximalwert auf, der zwischen einem betrieblichen Nennwert des Fanglagerluftspaltes LF und einem Vielfachen davon liegt. Das Vielfache kann in einem Bereich von dem 10-fachen bis zum 20-fachen liegen.

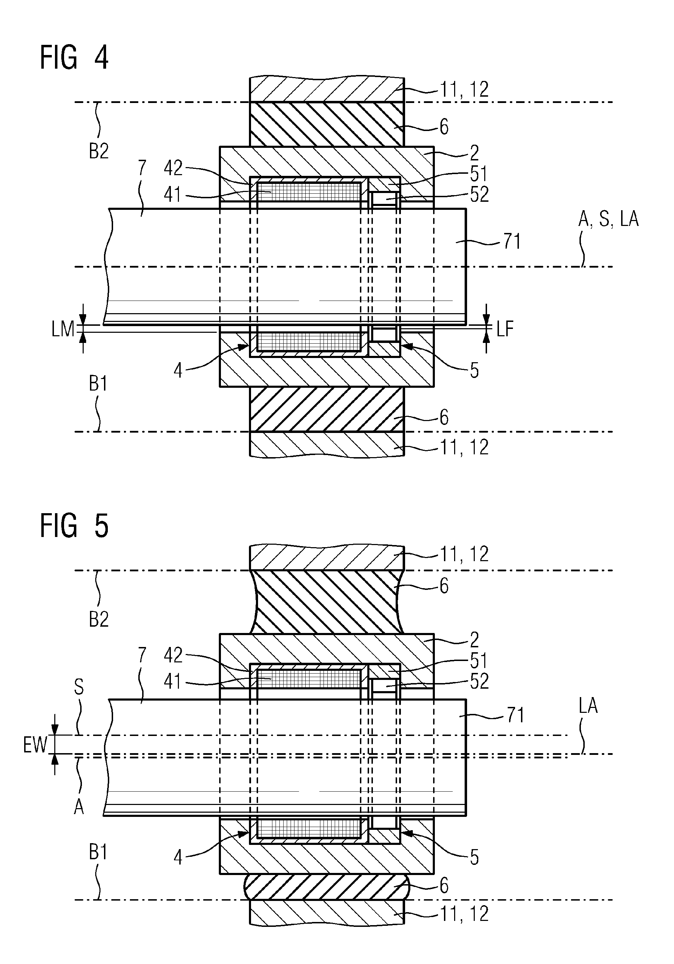

FIG 4 zeigt die Lageranordnung im rechten Teil der FIG 1 in vergrößerter Darstellung und im Schnitt durch die Drehachse A der rotierenden Maschine 10.

Im Vergleich zur vorherigen Lösung gemäß FIG 2 und FIG 3 ist die erfindungsgemäße Lageranordnung jetzt über beispielhaft zwei elastische Elemente 6 mit dem Lagerschild 11 der rotierenden Maschine 10 verbunden. Anstelle der beiden in vertikaler Richtung wirkenden elastischen Elemente 6 kann die Lageranordnung ein ringförmiges, radial zur Drehachse A angeordnetes elastisches Element 6 aufweisen. Alternativ kann die Lageranordnung fest in einem Lagergehäuse 2 aufgenommen, wobei dieses dann mit den beiden vertikal wirkenden elastischen Elementen 6 bzw. mit dem ringförmigen elastischen Element 6 umgeben ist. Weiterhin kann die Lageranordnung elastisch im Lagergehäuse 2 aufgenommen sein und dieses fest, das heißt starr oder steif, mit dem Lagerschild 11 bzw. dem Maschinengehäuse 12 der rotierenden Maschine 10 verbunden sein.

FIG 5 zeigt die Lageranordnung gemäß FIG 4 bei Ausfall der magnetischen Lagerung. Das gezeigte Ende 71 der Rotorwelle 7 ist wiederum in das Fanglager 5 gefallen und drückt dabei das Lagergehäuse 2 der erfindungsgemäßen Lageranordnung nach unten. Dadurch wird das untere elastische Element 6 oder der untere Teil des ringförmigen elastischen Elementes 6 zusammengestaucht und zugleich das obere elastische Element 6 bzw. der obere Teil des ringförmigen gemeinsamen elastischen Elementes 6 gestreckt. Mit EW ist wieder der im Vergleich zum Stand der Technik vorteilhaft zusätzlich verfügbare Einfederungsweg zum Abfedern der Rotorwelle 7 bezeichnet.

Das magnetische Radiallager 4 und das Fanglager 5 der erfindungsgemäßen Lageranordnung bzw. des erfindungsgemäßen Lagerbocks 1 sind vorzugsweise zur berührungslosen Lagerung und zum Auffangen der Rotorwelle 7 bis zu einer Achslast von 1 t ausgelegt. Bei besonders schweren rotierenden Maschinen kann die Achslast auch 5 t, 10 t oder mehr erreichen.

Schließlich können der erfindungsgemäße Lagerbock 1 und die erfindungsgemäße Lageranordnung auch ein nicht weiter gezeigtes, axiales Magnetlager zur axialen Fixierung der Rotorwelle 7 der rotierenden Maschine 10 aufweisen.

## Patentansprüche

1. Lageranordnung aus einem magnetischen Radiallager (4) und aus einem Fanglager (5) zur berührungslosen Lagerung und zum Auffangen einer Rotorwelle (7) einer Turbomaschine (10) mit einer elektrischen Leistung von 1000 kW und mehr, wobei beide Lager (4, 5) axial fluchtend und fest miteinander verbunden in einem gemeinsamen Lagergehäuse (2) aufgenommen sind, **dadurch gekennzeichnet**, dass das Lagergehäuse (2) in Bezug auf ein Lagerschild (11) oder auf ein Maschinengehäuse (12) elastisch aufgehängt ist.

2. Lageranordnung aus einem magnetischen Radiallager (4) und aus einem Fanglager (5) zur berührungslosen Lagerung und zum Auffangen einer Rotorwelle (7) einer Turbomaschine (10) mit einer Leistung von 1000 kW und mehr, wobei beide Lager (4, 5) axial fluchtend in einem gemeinsamen Lagergehäuse (2) aufgenommen sind, **dadurch gekennzeichnet**, dass beide Lager (4,5) im gemeinsamen Lagergehäuse (2) elastisch aufgehängt sind und dass das Lagergehäuse (2) fest mit einem Lagerschild (11) oder mit einem Maschinengehäuse (12) verbunden ist.

3. Lagerbock für eine Turbomaschine (10) mit einer Leistung von 1000 kW und mehr, wobei der Lagerbock in Bezug auf die Turbomaschine (10) axial außenliegend anordenbar ist und ein in einem gemeinsamen Lagergehäuse (2) aufgenommenes magnetisches Radiallager (4) zur berührungslosen Lagerung einer Rotorwelle (7) und ein Fanglager (5) zum Auffangen der Rotorwelle (7) der Turbomaschine (10) aufweist und wobei die beiden Lager (4,5) axial fluchtend und fest miteinander verbunden sind, **dadurch gekennzeichnet**, dass die beiden Lager (4,5) elastisch im Lagergehäuse (2) aufgenommen sind und dass der Lagerbock eine Lagerbockstütze (3) zur Befestigung des Lagergehäuses (2) an einem Maschinengehäuse (12) oder auf einem Fundament (20) der Turbomaschine (10) aufweist.

4. Lagerbock für eine Turbomaschine (10) mit einer Leistung von 1000 kW und mehr, wobei der Lagerbock in Bezug auf die Turbomaschine (10) axial außenliegend anordenbar ist und ein in einem gemeinsamen Lagergehäuse (2) aufgenommenes magnetisches Radiallager (4) zur berührungslosen Lagerung einer Rotorwelle (7) und ein Fanglager (5) zum Auffangen der Rotorwelle (7) der Turbomaschine (10) aufweist, wobei die beiden Lager (4,5) axial fluchtend und fest im Lagergehäuse (2) aufgenommen sind und wobei der Lagerbock eine Lagerbockstütze (3) zur Befestigung des Lagergehäuses (2) an einem Maschinengehäuse (12) oder auf einem Fundament (20) der Turbomaschine (10) aufweist, **dadurch gekennzeichnet,** dass zwischen dem Lagergehäuse (2) und der Lagerbockstütze (3) und/oder zwischen der Lagerbockstütze (3) und dem Maschinengehäuse (12) bzw. zwischen der Lagerbockstütze (3) und dem Fundament (20) zumindest ein elastisches Element (6) angeordnet ist.

5. Vorrichtung nach einem der vorangegangenen Ansprüche, **dadurch gekennzeichnet**, dass das elastische Element (6) aus einem elastischen Werkstoff, wie z.B. aus Gummi, aus einem Kunststoff-Elastomer, aus einer Gummi-Metall-Verbindung oder dergleichen, hergestellt ist.

6. Vorrichtung nach Anspruch 5, **dadurch gekennzeichnet**, dass das elastische Element (6) derart bemessene Feder- und Dämpfungseigenschaften aufweist, dass die Rotorwelle (7) bei Wegfall der magnetischen Lagerung um einen Einfederungsweg (EW) einfedert, welcher auf die Drehachse (A) der Rotorwelle (7) bezogen ist und einen Maximalwert aufweist, der zwischen einem betrieblichen Nennwert des Magnetlagerluftspaltes (LM) und einem Vielfachen davon, insbesondere einem 10- bis 20-fachen, liegt.

7. Vorrichtung nach einem der vorangegangenen Ansprüche, **dadurch gekennzeichnet**, dass das magnetische Radiallager (4) und das Fanglager (5) zur berührungslosen Lagerung und zum Auffangen der Rotorwelle (7) bis zu einer Achslast von 10 t ausgelegt sind.

## Claims

1. Bearing arrangement consisting of a magnetic radial bearing (4) and a touchdown bearing (5) for contactless support of a rotor shaft (7) and for catching said rotor shaft of a turbomachine (10) with an electric power output of 1000 kW and more, wherein both bearings (4, 5), in axial alignment and fixedly interconnected, are accommodated in a common bearing housing (2), **characterized in that** the bearing housing (2) is elastically suspended with regard to a bearing bracket (11) or with regard to a machine casing (12).

2. Bearing arrangement consisting of a magnetic radial bearing (4) and a touchdown bearing (5) for contactless support of a rotor shaft (7) and for catching said rotor shaft of a turbomachine (10) with a power output of 1000 kW and more, wherein both bearings (4, 5), in axial alignment, are accommodated in a common bearing housing (2), **characterized in that** both bearings (4, 5) are elastically suspended in the common bearing housing (2), and **in that** the bearing housing (2) is fixedly connected to a bearing bracket (11) or to a machine casing (12).

3. Bearing block for a turbomachine (10) with a power output of 1000 kW and more, wherein the bearing block is arranged axially on the outside with regard to the turbomachine (10) and has a magnetic radial bearing (4), accommodated in a common bearing housing (2), for contactless support of a rotor shaft (7), and a touchdown bearing (5) for catching the rotor shaft (7) of the turbomachine (10) and wherein the two bearings (4, 5) are in axial alignment and fixedly interconnected, **characterized in that** the two bearings (4, 5) are elastically accommodated in the bearing housing (2), and **in that** the bearing block has a support (3) for fastening of the bearing housing (2) on a machine casing (12) or on a bedplate (20) of the turbomachine (10).

4. Bearing block for a turbomachine (10) with a power output of 1000 kW and more, wherein the bearing block is arranged axially on the outside with regard to the turbomachine (10) and has a magnetic radial bearing (4), accommodated in a common bearing housing (2), for contactless support of a rotor shaft (7), and a touchdown bearing (5) for catching said rotor shaft (7) of the turbomachine (10), wherein the two bearings (4, 5), in axial alignment and fixed, are accommodated in the bearing housing (2), and wherein the bearing block has a support (3) for fastening of the bearing housing (2) on a machine casing (12) or on a bedplate (20) of the turbomachine (10), **characterized in that** at least one elastic element (6) is arranged between the bearing housing (2) and the bearing-block support (3) and/or between the bearing-block support (3) and the machine casing (12) or between the bearing-block support (3) and the bedplate (20).

5. Device according to one of the preceding claims, **characterized in that** the elastic element (6) is produced from an elastic material, such as rubber, a plastic elastomer, a rubber-metal composite, or the like.

6. Device according to Claim 5, **characterized in that** the elastic element (6) has spring characteristics and damping characteristics rated in such a way that in the case of failure of the magnetic support the rotor shaft (7) deflects by a deflection travel (EW) which is in relation to the rotational axis (A) of the rotor shaft (7) and has a maximum value which lies between an operational nominal value of the magnetic-bearing air gap (LM) and a multiple thereof, especially a multiple of between 10 and 20.

7. Device according to one of the preceding claims **characterized in that** the magnetic radial bearing (4) and the touchdown bearing (5) are designed for contactless support of the rotor shaft (7) and for catching said rotor shaft up to a shaft load of 10 t.

## Revendications

1. Agencement de paliers constitué d'un palier (4) radial magnétique et d'un palier (5) d'accueil pour le support sans contact et pour l'accueil d'un arbre (7) rotorique d'une turbomachine (10) d'une puissance électrique de 1000 kW et plus, les deux paliers (4, 5) étant reçus en étant alignés axialement et reliés fixement l'un à l'autre dans un carter (2) de palier commun,
**caractérisé en ce que** le carter (2) de palier est suspendu élastiquement par rapport à un flasque (11) de palier ou à un carter (12) de la machine.

2. Agencement de paliers constitué d'un palier (4) radial magnétique et d'un palier (5) d'accueil pour le support sans contact et pour l'accueil d'un arbre (7) rotorique d'une turbomachine (10) d'une puissance électrique de 1000 kW et plus, les deux paliers (4, 5) étant reçus en étant alignés axialement et reliés fixement l'un à l'autre dans un carter (2) de palier commun,
**caractérisé en ce que** les deux paliers (4, 5) sont suspendus élastiquement dans un carter (2) de palier commun et **en ce que** le carter (2) de palier est relié fixement à un flasque (11) de palier ou à un carter (12) de la machine.

3. Support de palier pour une turbomachine (10) d'une puissance de 1000 kW et plus, le support de palier pouvant être disposé en étant à l'extérieur axialement de la turbomachine (10) et ayant un palier (4) radial magnétique reçu dans un carter (2) de palier commun pour le support sans contact d'un arbre (7) rotorique et un palier (5) d'accueil pour l'accueil de l'arbre (7) rotorique de la turbomachine (10) et les deux paliers (4, 5) étant reliés l'un à l'autre fixement et en étant alignés axialement, **caractérisé en ce que** les deux paliers (4, 5) sont reçus élastiquement dans le carter (2) de palier et **en ce que** le support de palier a un appui (3) de support de palier pour la fixation du carter (2) de palier à un carter (12) de la machine ou à une sole (20) de la turbomachine (10).

4. Support de palier pour une turbomachine (10) d'une puissance de 1000 kW et plus, le support de palier pouvant être disposé en étant à l'extérieur axialement de la turbomachine (10) et ayant un palier (4) radial magnétique reçu dans un carter (2) de palier commun pour le support sans contact d'un arbre (7) rotorique et un palier (5) d'accueil pour l'accueil de l'arbre (7) rotorique de la turbomachine (10) et les deux paliers (4, 5) étant reliés l'un à l'autre fixement dans le carter (2) de palier et en étant alignés axialement, et le support de palier ayant un appui (3) de support de palier pour la fixation du carter (2) du palier à un carter (12) de la machine ou à une sole (20) de la turbomachine (10), **caractérisé en ce qu'**au moins un élément (6) élastique est disposé entre le carter (2) du palier et l'appui (3) du support de palier et/ou entre l'appui (3) du support de palier et le carter (12) de la machine ou entre l'appui (3) du support de palier et la sole (20).

5. Dispositif suivant l'une des revendications précédentes, **caractérisé en ce que** l'élément (6) élastique est en un matériau élastique, comme par exemple en caoutchouc, en un élastomère de matière plastique, en un composé caoutchouc-métal ou analogue.

6. Dispositif suivant la revendication 5, **caractérisé en ce que** l'élément (6) élastique a des propriétés de ressort et d'amortissement proportionnées, de manière à ce que l'arbre (7) rotorique soit, si le support magnétique est omis, suspendu sur un trajet (EW) de suspension, qui est rapporté à l'axe (A) de rotation de l'arbre (7) rotorique et qui a une valeur maximum, comprise entre une valeur nominale de service de l'entrefer (LM) du palier magnétique et un multiple de celle-ci, notamment un multiple de 10 à 20 fois.

7. Dispositif suivant l'une des revendications précédentes, **caractérisé en ce que** le palier (4) radial magnétique et le palier (5) d'accueil sont conçus pour le support sans contact et l'accueil de l'arbre (7) rotorique jusqu'à une charge d'axe de 10 t.
